(19) Europäisches Patentamt

European Patent Office

Office européen des brevets

(11) **EP 1 635 071 A2**

(12) **EUROPÄISCHE PATENTANMELDUNG**

(43) Veröffentlichungstag:
**15.03.2006 Patentblatt 2006/11**

(51) Int Cl.:
***F15B 11/042*** (2006.01)

(21) Anmeldenummer: 05018987.7

(22) Anmeldetag: **01.09.2005**

| | |
|---|---|
| (84) Benannte Vertragsstaaten:<br>**AT BE BG CH CY CZ DE DK EE ES FI FR GB GR HU IE IS IT LI LT LU LV MC NL PL PT RO SE SI SK TR**<br>Benannte Erstreckungsstaaten:<br>**AL BA HR MK YU** | (71) Anmelder: **LuK Lamellen und Kupplungsbau Beteiligungs KG**<br>**77815 Bühl (DE)** |
| (30) Priorität: **11.09.2004 DE 102004043958** | (72) Erfinder: **Kremer, Eugen**<br>**77815 Bühl (DE)** |
| | (74) Vertreter: **Duschl, Edgar Johannes**<br>**LuK GmbH & Co. oHG**<br>**Bussmatten 2**<br>**77815 Bühl (DE)** |

(54) **Hydraulisches System, insbesondere für Kraftfahrzeuge**

(57) Bei einem hydraulischen System, insbesondere für Kraftfahrzeuge, umfassend einen Geberzylinder (4), einen Nehmerzylinder (5) und eine diese verbindende Druckmediumsleitung (11), wird eine kostengünstigere Druckerhöhung erzielt, indem das hydraulische System eine Pumpe (16) mit einem Eingang (18) und einem Ausgang (19) und ein Ventil (17) umfasst, die in der Druckmediumsleitung zwischen Geberzylinder (4) und Nehmerzylinder (5) angeordnet sind, wobei das Ventil (17) eine erste Ventilstellung (GN) hat, in der Geberzylinder (4) und Nehmerzylinder (5) direkt miteinander verbunden sind, sowie eine zweite Ventilstellung, in der der Geberzylinder und der Nehmerzylinder über die Pumpe (16) miteinander verbunden sind.

## Fig. 3

**Beschreibung**

Die vorliegende Erfindung betrifft ein Hydraulisches System, insbesondere für Kraftfahrzeuge, umfassend einen Geberzylinder, einen Nehmerzylinder und eine diese verbindende Druckmediumsleitung sowie ein hydraulisches Ventil, insbesondere zur Verwendung in einem hydraulischen System für Kraftfahrzeuge.

Um die vom Fahrer eines Kraftfahrzeuges gespürte Pedalkraft zu reduzieren ist es bekannt, ein servounterstütztes hydraulisches System zur Kupplungsbetätigung einzusetzen. Eine z. B. elektrische Pumpe im hydraulischen System erhöht den Druck zwischen Geber- und Nehmerzylinder. Die Pumpe kann z. B. elektronisch geregelt sein. Dazu ist mindestens ein Drucksensor in dem hydraulischen System notwendig, da der Pumpendruck Druckabhängig ist. Nachteilig ist bei derartigen Systemen, dass die Kosten relativ hoch sind (z. B. durch den Drucksensor und die elektronische Regelung), die Hysterese der Kupplungskennlinie im Pedalkraftverlauf reproduziert und manchmal gar, insbesondere bei hohen Pedalgeschwindigkeiten, verstärkt wird und dass zusätzliche Pulsationen des Pedals auftreten können.

Aus der EP 00 415 711 (DE 690 09 345) ist ein hydraulisches System für ein stufenloses Getriebe (CVT) bekannt, bei dem mehrere Steuerventile in den Regelkreisen für die Getriebeverstellung und die Kupplungssteuerung angeordnet sind. Die Steuerungsventile werden jeweils durch eigene elektronisch geregelte Hydrauliksteuerkreise angesteuert.

Das der vorliegenden Erfindung zugrunde liegende Problem ist es daher, ein hydraulisches System bereitzustellen, das die zuvor genannten Nachteile behebt, insbesondere soll auf eine elektronische Regelung der Servounterstützung während der Pedalbetätigung verzichtet werden können.

Dieses Problem wird gelöst durch ein hydraulisches System, insbesondere für Kraftfahrzeuge, umfassend einen Geberzylinder, einen Nehmerzylinder und eine diese verbindende Druckmediumsleitung, dadurch gekennzeichnet, dass das hydraulische System eine Pumpe mit einem Eingang und einem Ausgang und ein Ventil umfasst, die in der Druckmediumsleitung zwischen Geberzylinder und Nehmerzylinder angeordnet sind, wobei das Ventil eine erste Ventilstellung hat, in der Geberzylinder und Nehmerzylinder direkt miteinander verbunden sind, sowie eine zweite Ventilstellung, in der der Geberzylinder und der Nehmerzylinder über die Pumpe miteinander verbunden sind. Das Ventil weist vorzugsweise eine dritte Ventilstellung auf, in der der Geberzylinder und der Nehmerzylinder über die Pumpe miteinander verbunden sind, wobei der Ausgang und Eingang der Pumpe über einen Bypass miteinander verbunden sind. Der über den Bypass fließende Volumenstrom ist vorzugsweise durch das Ventil regelbar, wobei die Ventilstellung des Ventils vorzugsweise von dem in dem hydraulischen System herrschenden Druck abhängt. Das Ventil schaltet die hydraulische Verbindung zwischen Geber- und Nehmerzylinder also von einer direkten Verbindung auf eine Verbindung über die Pumpe um, wobei zwischen beiden Endstellungen eine Übergangsstellung besteht, in der die Pumpe durch einen Bypass, der den Ein- und Ausgang der Pumpe miteinander kurzschließt, nur teilweise Wirksam ist. In dieser dritten Ventilstellung wird also die Pumpe langsam, d. h. abhängig vom Druck in dem hydraulischen System und damit mittelbar abhängig vom Kupplungspedalweg, zugeschaltet. Zunächst wirkt sich die Pumpe nicht aus, sie läuft gewissermaßen leer durch den voll wirksamen Bypass. Der Bypass wird bei weiterer Druckerhöhung langsam geschlossen, bei voll geschlossenem Bypass ist die Druckerhöhung zwischen Geberzylinder und Nehmerzylinder durch die Pumpe maximal. Bei vollständig geöffnetem Bypass, also bei eingekuppelter Kupplung, kann die Pumpe auch abgeschaltet werden. Ein z. B. mit dem Kupplungspedal verbundener Endschalter ist dabei das (einzige) elektrische Steuerungsmittel, dies wird hier nicht als elektronische Regelung im Sinne der Aufgabenstellung verstanden.

In einer Weiterbildung des hydraulischen Systems ist vorgesehen, dass das Ventil mindestens einen geberzylinderseitigen Anschluss und einen nehmerzylinderseitigen Anschluss sowie einem Kolben , der axial verschieblich in einem Gehäuse angeordnet ist, umfasst, wobei der Kolben eine mit dem geberzylinderseitigen Anschluss hydraulisch in Wirkverbindung stehende Stirnfläche sowie eine der Stirnfläche gegenüberliegende Rückenfläche aufweist, wobei an der Rückenfläche eine Feder angeordnet ist, die auf den Kolben eine Kraft in Richtung der Stirnfläche ausübt und dass sowohl der Kolben als auch das Gehäuse Verbindungskanäle aufweist, die Ventile bilden, die bei axialer Verschiebung des Kolbens öffnen bzw. schließen. Die Verbindungskanäle können beliebiger Art, z. B. Bohrungen, Ausnehmungen und dergleichen sein, sind aber bevorzugt Ringnuten an der Außenfläche des Kolbens und der Innenfläche des Gehäuses. Der Kolben ist dabei vorzugsweise ein Drehteil mit im Wesentlichen kreisförmigen Querschnitten als Außenfläche, die Bohrung zur Aufnahme des Kolbens ist entsprechend geformt.

In einer Weiterbildung des hydraulischen Systems ist vorgesehen, dass dieses ein erstes Ventil umfasst, das durch eine Zuleitungsringnut des Gehäuses und eine Kolbenringnut des Kolbens gebildet wird. Des Weiteren umfasst es vorzugsweise ein zweites Ventil, das durch eine Ableitungsringnut des Gehäuses und eine Kolbenringnut des Kolbens gebildet wird sowie weiter bevorzugt ein drittes Ventil, das durch eine Zuleitungsringnut des Gehäuses und eine Kolbenringnut des Kolbens gebildet wird. Die genannten Ringnuten sind vorzugsweise konzentrisch um den Kolben angeordnet, die unterschiedlichen Namen dienen rein der leichteren Identifikation.

In einer Weiterbildung des hydraulischen Systems ist vorgesehen, dass das in einer Ausgangslage des Kolbens das erste Ventil geöffnet, das zweite Ventil geschlossen und das dritte Ventil geöffnet ist. Dabei ist vorgesehen, dass bei einer axialen Verschiebung des Kolbens zunächst das erste Ventil schließt, bei einer weiteren Verschiebung das zweite Ventil öffnet und bei einer weiteren Verschiebung das dritte Ventil schließt. Des Weiteren kann vorgesehen sein, dass bei einer axialen Verschiebung des Kolbens, bei der das erste Ventil schließt, das zweite Ventil öffnet und das dritte Ventil geöffnet ist. Des Weiteren kann vorgesehen sein, dass das bei einer axialen Verschiebung des Kolbens, bei der das dritte Ventil schließt, das zweite Ventil geöffnet und das erste Ventil geschlossen ist.

In einer Weiterbildung des hydraulischen Systems ist vorgesehen, dass der Kolben an seiner Rückenfläche eine Kolbenfläche aufweist, die mit einer Stufenbohrung einen Kolben / Zylinderanordnung bildet, die bei Druckbeaufschlagung eine Kraft auf den Kolben in Richtung der Federkraft ausübt. Dies bildet eine Art "Gegenkolben" zu der Stirnfläche und verringert deren Kraftwirkung. Ebenso kann die Stufenbohrung hydraulisch mit dem nehmerzylinderseitigen Anschluss verbunden sein. Man erhält so ein insgesamt geschlossenes System, bei gegen z. B. den Luftdruck arbeitendem Kolben müsste eine aufwändige Dichtung oder eine Leckageölabführung, z. B. zum Ausgleichsbehälter des hydraulischen Systems, vorgesehen werden.

Um das Druckniveau insbesondere des Ringkolbens zu begrenzen und auch um den Volumenstrom bei im Leerlauf laufender Pumpe zu begrenzen kann vorgesehen sein, dass vor dem Eingang der Pumpe ein Drosselventil angeordnet ist. Dabei ist vorgesehen, dass der Eingang der Pumpe mit einem Ringkolbenraum, der durch den Zapfen und den Außenumfang des Kolbens gebildet wird, hydraulisch verbunden ist.

Das Eingangs genannte Problem wird auch gelöst durch ein hydraulisches Ventil zur Verwendung in einem hydraulischen System für Kraftfahrzeuge, bei dem mindestens ein oder eine Kombination der auf ein hydraulisches Ventil gerichteten Merkmale der vorhergehenden Ansprüche verwirklicht sind.

Im Folgenden werden Ausführungsbeispiele der Erfindung anhand der beiliegenden Zeichnungen erläutert. Dabei zeigen:

Fig. 1   eine schematische Darstellung eines hydraulischen Systems anhand eines Ausführungsbeispiels einer Kupplungsausrückvorrichtung;

Fig. 2   eine Schnittdarstellung eines erfindungsgemäßen Ventils

Fig. 3   eine Prinzipskizze des hydraulischen Systems mit dem erfindungsgemäßen Ventil bei unbetätigter Kupplung

Fig. 4   eine Prinzipskizze des hydraulischen Systems mit dem erfindungsgemäßen Ventil bei betätigter Kupplung

Fig. 5   ein Ausführungsbeispiel für eine Pumpe mit einer erfindungsgemäßen Ventilsteuerung.

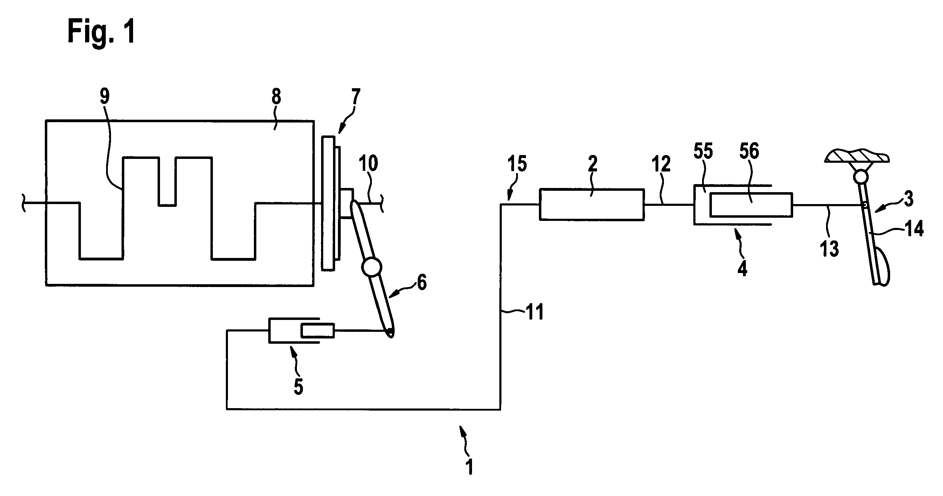

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Der Geberzylinder umfasst ein Gehäuse 55 und einen in diesem axial verschiebbar angeordneten Kolben 56, der einen mit einer Hydraulikflüssigkeit gefüllten Druckraum 57 begrenzt und bei Betätigung des Geberzylinders 4 mittels einer auf den Kolben 56 wirkenden Kolbenstange 13 axial verschoben wird und dadurch die Hydraulikflüssigkeit mit Druck beaufschlagt wird. Die Funktionsweise des Nehmerzylinders 4 ist im Prinzip identisch. ist Ein Ventilblock 2 ist in dem gezeigten Ausführungsbeispiel in eine diese verbindende Druckmediumsleitung 15 eingebaut und trennt diese in einen ersten Leitungsstrang 11 und einen zweiten Leitungsstrang 12 voneinander. Es versteht sich, dass in anderen Ausführungsbeispielen der Ventilblock 2 an dem Geberzylinder 4 oder dem Nehmerzylinder 5 angeordnet sein kann. Weiterhin kann in den Ventilblock 2 gleichzeitig die Funktion eines Schwingungsfilters, beispielsweise als so genanntes "Kribbelfilter", integriert sein.

Das Kupplungsausrücksystem 3 betätigt die Kupplung 7 hydraulisch durch Beaufschlagung des Geberzylinders 4 mittels eines Kupplungspedals 14, das ein Fußpedal, ein Aktor, beispielsweise ein elektrischer Aktor, oder dergleichen sein kann. Hierdurch wird mittels einer mechanischen Übertragung 13 Druck im Geberzylinder 4 aufgebaut, der über die Druckmediumsleitung 15 bzw. den zweiten Leitungsstrang 12, den Ventilblock 2 und den ersten Leitungsstrang 11 einen Druck im Nehmerzylinder 5 aufbaut. Der Nehmerzylinder 5 kann konzentrisch um die Getriebeeingangswelle 10 angeordnet sein und sich axial an einem - nicht dargestellten- Getriebegehäuse abstützen und die nötige Ausrückkraft über ein Ausrücklager an der Kupplung 7, beziehungsweise an deren Ausrückelementen wie Tellerfeder, aufbringen. In Fig. 1 ist zum leichteren Verständnis der Funktionsweise ein Nehmerzylinder 5, der über eine Ausrückmechanik 6 einen Ausrücker betätigt und außerhalb der Kupplungsglocke angeordnet ist, dargestellt, wobei dieser mittels eines in hydraulischer Verbindung mit dem Geberzylinder stehenden im Nehmerzylindergehäuse untergebrachten Kolbens die Ausrückmechanik beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht dargestelltes Getriebe und anschließend auf die Antriebsräder eines Kraftfahrzeuges.

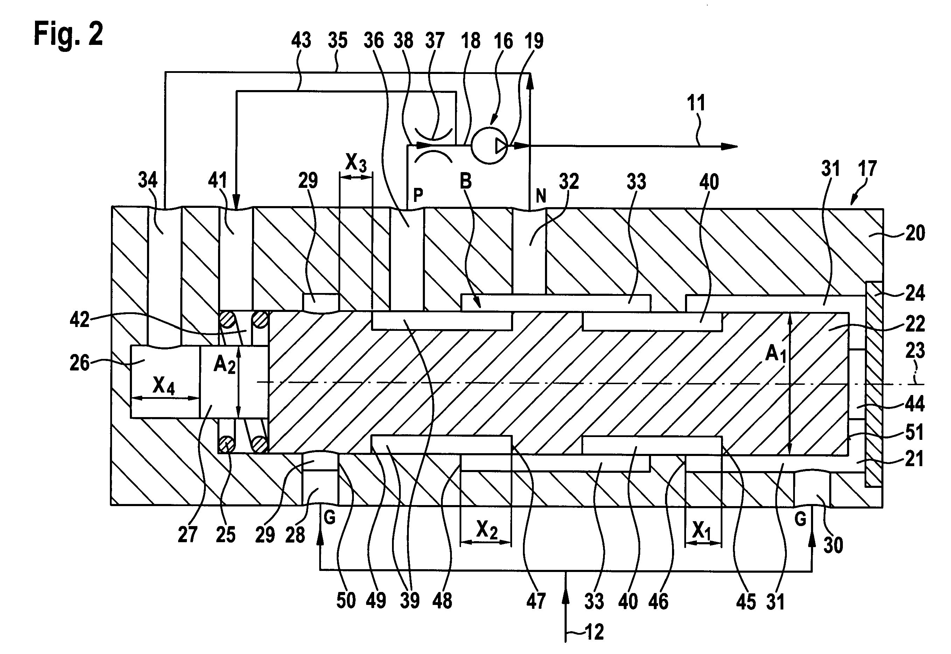

Figur 2 zeigt eine Skizze des Ventilblocks 2 in einer Schnittdarstellung. Der Ventilblock 2 umfasst als wesentliche Elemente eine Pumpe 16, die zum Beispiel von einem Elektromotor angetrieben wird, und ein Ventil 17. Der Ventilblock 2 ist in der Druckmediumsleitung 15 zwischen Geber- und Nehmerzylinder angeordnet, in Figur 2 dargestellt sind der erste Leitungsstrang 11, der mit dem Nehmerzylinder verbunden ist, sowie der zweite Leitungsstrang 12, der mit dem Geberzylinder 4 verbunden ist. Die Pumpe 16 umfasst einen Eingang 18 sowie einen Ausgang 19, der mit dem ersten Leitungsstrang 11 verbunden ist. Die Pumprichtung der Pumpe 16 ist vom Eingang 18 zum Ausgang 19, die ist durch einen Pfeil in Figur 2 angedeutet.

Das Ventil 17 umfasst ein Gehäuse 20, in dem eine Bohrung 21 angeordnet ist. Innerhalb der Bohrung 21 befindet sich ein axial beweglicher Kolben 22, der entlang der Achse 23 axial beweglich ist. Das Gehäuse 20 ist im Wesentlichen ein einteiliger Block, der z. B. durch einen Deckel 24 verschlossen ist, alternativ kann das Gehäuse 20 auch axial geteilt sein. An der der Feder 25 abgewandten Seite des Kolbens 22 ist ein Anschlag 44 in Form einer scheibenförmigen Erhebung angeordnet. Der Kolben 22 stützt sich mit einer Feder 25 auf einer mit einer Stufenbohrung 26 versehenen Seite des Gehäuses 20 ab. Die Stufenbohrung 26 hat einen geringeren Durchmesser als die Bohrung 21, ein Zapfen 27 mit etwa gleichem Außendurchmesser wie der Innendurchmesser der Stufenbohrung 26 (Spielpassung) kann in die Stufenbohrung 26 gegen den Druck der Feder 25 einschoben werden Die Stufenbohrung 26 bildet mit dem Zapfen 27 einen rückseitigen Druckzylinder mit dem Zapfen 27 als Kolben und der Stufenbohrung 26 als Zylinderbohrung . In das Gehäuse 20 sind mehrere Zuleitungen und zu den Zuleitungen gehörende Radialnuten eingebracht. Eine erste Zuleitung 28 geht über in eine umlaufende erste Zuleitungsringnut 29. Erste Zuleitung 28 sowie erste Ringnut 29 sind an der dem Zapfen 27 zugewandten Seite des Kolbens 22 angeordnet. Eine zweite Zuleitung 30 geht über in eine zweite Zuleitungsringnut 31. Eine erste Ableitung 32 geht über in eine Ableitungsringnut 33. Eine dritte Zuleitung 34 ist verbunden mit der Stufenbohrung 26. Die erste Ableitung 32 und die dritte Zuleitung 34 werden durch eine Verbindungsleitung 35 miteinander verbunden. Die erste Ableitung 32 ist des Weiteren an der Kreuzung des ersten Leitungsstranges 11 mit der Verbindungsleitung 35 direkt mit dem ersten Leitungsstrang 11 verbunden. Es besteht also immer eine Verbindung zwischen der ersten Ableitung 32 und dem ersten Leitungsstrang 11. Zwischen erster Ableitung 32 und dritter Zuleitung 34 ist eine dritte Ableitung 36 angeordnet. Diese ist über ein Drosselventil 37 und eine Hydraulikleitung 38 mit dem Eingang 18 der Pumpe 16 verbunden. Zwischen dritter Ableitung 36 und dritter Zuleitung 34 ist eine dritte Zuleitung 41 angeordnet, die zum einen mit dem zwischen Zapfen 27 und Bohrung 21 verbleibenden Ringkolbenraum 42, zum anderen über eine weitere Hydraulikleitung 43 mit dem Eingang 18 der Pumpe 16 verbunden ist.

An dem Kolben 22 sind eine erste Kolbenringnut 39 sowie eine zweite Kolbenringnut 40 angeordnet.

Erste und zweite Kolbenringnut 39, 40 dienen dazu, je nach axialer Stellung des Kolbens 22 unterschiedliche Zuleitungen 28, 30, 34, 41 mit unterschiedlichen Ableitungen 32, 36 zu verbinden. Zum leichteren Verständnis sind erste und zweite Zuleitung 28, 30 in Fig. 2 auch mit G (wie geberzylinderseitige Zuleitung), die erste Ableitung 32 mit N (wie nehmerzylinderseitiger Anschluss) und die dritte Ableitung mit P (wie pumpenseitiger Anschluss) bezeichnet.

Im Folgenden wird mit "zapfenabgewandte Seite" in Figur 2 die Seite in axialer Richtung des Kolbens 22 verstanden, die dem Zapfen 27 abgewandt, damit also dem Anschlag 44 zugewandt ist. Entsprechend wird mit "zapfenzugewandter Seite" die Seite verstanden, die in axialer Richtung dem Zapfen 27 zugewandt ist.

X1 bezeichnet in Figur 2 den Abstand zwischen der zapfenabgewandten Nutseite 45 der zweiten Kolbenringnut 40 zu der zapfenzugewandten Nutseite 46 der zweiten Zuleitungsringnut 31. Diese wird im Folgenden auch als Steuerkante G-N bezeichnet. Entsprechend bezeichnet X2 den Abstand zwischen der zapfenabgewandten Nutseite 47 der ersten Kolbenringnut 39 zu der zapfenzugewandten Nutseite 48 der Ableitungsringnut 33, im Folgenden auch als Steuerkante N-P bezeichnet. X3 bezeichnet den Abstand zwischen der zapfenabgewandten Nutseite 50 der ersten Zuleitungsringnut 29 zu der zapfenzugewandten Nutseite 49 der ersten Kolbenringnut 39, im Folgenden auch als Steuerkante G-P bezeichnet. Mit $A_1$ ist der Durchmesser des Kolbens 22 bezeichnet, mit $A_2$ der Durchmesser des Zapfens 27 bzw. der Innendurchmesser der Stufenbohrung 26, mit X4 ist der axiale Weg des Kolbens 22 bezeichnet.

Der Kolben umfasst eine Stirnfläche 51, die immer mit der zweiten Zuleitung 30 in hydraulischer Wirkverbindung steht, auf diese Fläche wirkt also jederzeit der Hydraulikdruck auf Seiten des Geberzylinders 4. Der Stirnfläche 51 gegenüberliegend ist eine Rückenfläche 58 angeordnet, die im vorliegenden Ausführungsbeispiel abgestuft ausgebildet ist durch den Zapfen 27. Unter Stirnfläche und Rückenfläche werden hier alle denkbaren Flächenformen, die radial zur Längsachse des Kolbens 22 verlaufen, verstanden.

In Figur 2 ist eine neutrale Stellung des Kolbens 22 dargestellt, in dieser wird der Kolben 22 durch die Feder 25 gegen den Anschlag 44 gedrückt, X4 nimmt dabei den größten Wert an. Für die Größen X1, X2 und X3 gilt: X3 < X1 < X2 oder X3 = X1 < X2. Bei X1 < X2 < X3 wird der Kolben 22 in einer axialen Stellung selbst zur hydraulischen Übertragungsstrecke, dies ist zwar nicht schädlich, wird aber nicht bevorzugt. Wird X4 verringert, so wird zunächst X3 zu Null und damit eine Verbindung zwischen erster Zuleitung über die erste Zuleitungsringnut 29 und die erste Kolbenringnut 39 zur dritten Ableitung 36 hergestellt. Ist X1 = X3, so wird gleichzeitig X1 zu Null, so dass die Verbindung zwischen der zweiten Zuleitung 30 über die zweite Zuleitungsringnut 31 und die Kolbenringnut 40 sowie die Ableitungsringnut 33 zur ersten Ableitung 32 unterbrochen wird. Es wird also der zweite Leitungsstrang von der zweiten Zuleitung 30 auf die erste Zuleitung 28 umgeschaltet. Ist X3 < X1, so sind über einen kleinen axialen Verschiebeweg des Kolbens 22 beide Zuleitungen, sowohl die erste als auch zweite, geöffnet. Bei einer weiteren Verringerung von X4 wird X2 zu Null und die Verbindung zwischen erster Ableitung 32 und dritter Ableitung 36 unterbrochen.

Auf diese Weise bilden die Zuleitungen und Ableitungen mit den Ringnuten in dem Gehäuse 20 und dem Kolben 22 drei Ventile, ein erstes Ventil GN, ein zweites Ventil GP und ein drittes Ventil NP. Die Bezeichnung der Ventile leitet sich von den jeweils sperrbaren Verbindungen ab, das erste Ventil GN öffnet und schließt die hydraulische Verbindung G-N, das zweite Ventil GP öffnet und schließt die Verbindung G-P, das dritte Ventil NP öffnet und schließt die Verbindung N-P. Wird X1 zu Null, so wird die Verbindung zwischen zweiter Zuleitung 30 (somit G) und der Stufenbohrung 26 unterbrochen. Solange dieses Ventil geöffnet ist, erzeugt der Hydraulikdruck in dem zweiten Leitungsstrang 12 eine Kraft in Richtung der Feder 25, die durch den mit A2 angegebenen Querschnitt des Zapfens 27 bestimmt wird. Schließt das erste Ventil GN, so wird diese zusätzlich auf den Kolben 22 ausgeübte Kraft in Wirkrichtung der Feder 25 nicht mehr ausgeübt. das dritte Ventil NP wird gebildet durch die erste Kolbenringnut 39 und die Ableitungsringnut 33. Dieses wird geschlossen, sobald X2 zu Null wird. Dadurch wird die Verbindung zwischen Eingang 18 und Ausgang 19 der Pumpe 16 unterbrochen. Diese Verbindung bildet bei geöffnetem dritten Ventil NP einen Bypass B (N->P) für die Pumpe 16. Das zweite Ventil GP wird gebildet durch die erste Kolbenringnut 39 und die erste Zuleitungsringnut 29. Sobald X3 kleiner als Null wird, wird dieses dritte Ventil geöffnet, so dass eine Verbindung zwischen zweitem Leitungsstrang 12 über die erste Zuleitung 28 zur dritten Ableitung 36 der Pumpe 16 hergestellt wird, die Verbindung G zu P also geöffnet wird. Das Drosselventil 37 gewährleistet ein niedriges Druckniveau in dem Ringkolbenraum 42. Alternativ könnte der Ringkolbenraum 42 z. B. mit einem Ausgleichsbehälter des hydraulischen Systems, über an sich bekannte Schnüffelbohrungen mit dem Kolbenraum des Geberzylinders 4, was hier nicht dargestellt ist, verbunden ist.

Die Öffnungsquerschnitte der drei durch die Ringnuten gebildeten Ventile ändern sich durch die Verschiebung des Kolbens 22 stetig, so dass abhängig von der Stellung des Kolbens 22 unterschiedliche wirksame Durchflussflächen der Verbindungen zwischen der zweiten Zuleitung 30 und der Stufenbohrung 26 sowie zwischen der ersten Ableitung 32 und der Stufenbohrung 26 sowie der ersten Zuleitung 28 zur dritten Ableitung 36 realisiert werden.

Ist der Nehmerzylinderdruck PN kleiner als eine Schwelle PSCH, so befindet sich der Kolben 22 an dem Anschlag 44. Der Geberzylinder und der Nehmerzylinder sind durch das erste Ventil GN direkt verbunden und der Nehmerzylinderdruck $p_N$ ist gleich dem Geberzylinderdruck $p_G$. Gleichzeitig arbeitet die Pumpe 16 über den durch das dritte Ventil NP geöffneten Bypass in einer Zirkulation erste Ableitung 32, zweites Ventil, dritte Ableitung 36, Hydraulikleitung 38, Eingang 18, Pumpe 16, Ausgang 19. Die zwischen Drosselventil 37 und Eingang 18 abzweigende Verbindungsleitung 35 übt über den gegenüber dem Nehmerzylinderdruck $P_N$ geringeren Druck in dem Ringkolbenraum 42 eine zusätzliche Kraft in Wirkrichtung der Feder 25 auf den Kolben 22 aus. Entgegen der Wirkrichtung der Feder 25 wird dabei auf die Stirnfläche 51 (mit der Fläche $A_2$) eine Druckkraft durch den Geberzylinderdruck $P_G$ ausgeübt. Der zuvor beschriebene Zustand bleibt konstant bei steigendem Nehmerzylinderdruck bis zu dem Moment, wenn

$$A_1\, p_G = A_2\, p_N + F_{Feder} \qquad (1)$$

wird, wobei A1 und A2 die Endflächen des Kolbens sind, $F_{Feder}$ die Federkraft der Feder 25 ist. Da in diesem Zustand $P_N$ gleich $P_G$ ist, gilt für die Druckschwelle $P_{SCH}$:

$$p_{SCH} = F_{Feder}/(A_1 - A_2) \qquad (2)$$

Ersetzt man in Formel 1 die Kraft der Feder mit Hilfe von Gleichung 2, so erhält man

$$p_G = \frac{A_2}{A_1}(p_N - p_{SCH}) + p_{SCH} \quad (3)$$

Diese Beziehungen gelten immer, wenn der Kolben nicht auf dem Anschlag anliegt. In diesem Fall wird durch die Fläche des Anschlags 44 die wirksame Kolbenfläche verringert. Bei einem vorgegebenen Pedalweg wird PN genauso groß wie dies ohne Servounterstützung der Fall ist, weil dieser Druck von der Kupplungskennlinie bestimmt wird. Die Gleichung 3 ist äquivalent der üblicherweise definierten Schwelle der Pedalkraft

$$F_2 - F_{SCH} = k\,(F_1 - F_{SCH}) \qquad (4)$$

Bei der $F_2$ die Pedalkraft mit Servounterstützung, $F_1$ die Pedalkraft ohne Servounterstützung, $F_{sch}$ die Schwelle der Unterstützung und k < 1 ein Reduzierungsfaktor ist. In Gleichung (4) ist k äquivalent zu $A_2/A_1$. Dies bedeutet, dass das erfindungsgemäße hydraulische System die benötigte Charakteristik der Servounterstützung statisch gewährleistet.

Statt einer elektronischen Regelung des Pumpenvolumenstroms wird bei dem erfindungsgemäßen hydraulischen System und dem erfindungsgemäßen Ventil ein konstanter oder (elektronisch unkontrolliert) variabler Pumpenvolumenstrom, der zwischen dem Pedalvolumenstrom und Zirkulationsvolumenstrom des Bypass durch eine automatische Positionierung des Kolbens 22 geteilt wird, verwendet. Die automatische Teilung wird durch das Gleichgewicht des Kolbens 22 zwischen verschiedenen Druckflächen, den Flächen $A_1$ und $A_2$, sowie der durch die Feder 25 ausgeübten Federkraft erreicht. Dadurch wird der lineare Zusammenhang gemäß Gleichung (4) zwischen Geberzylinder- und Nehmerzylinderdruck gewährleistet.

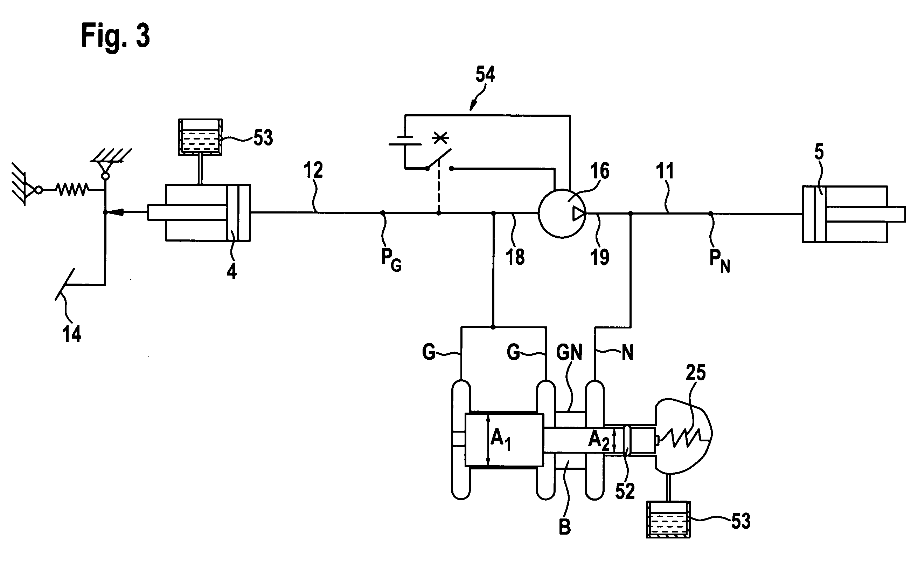

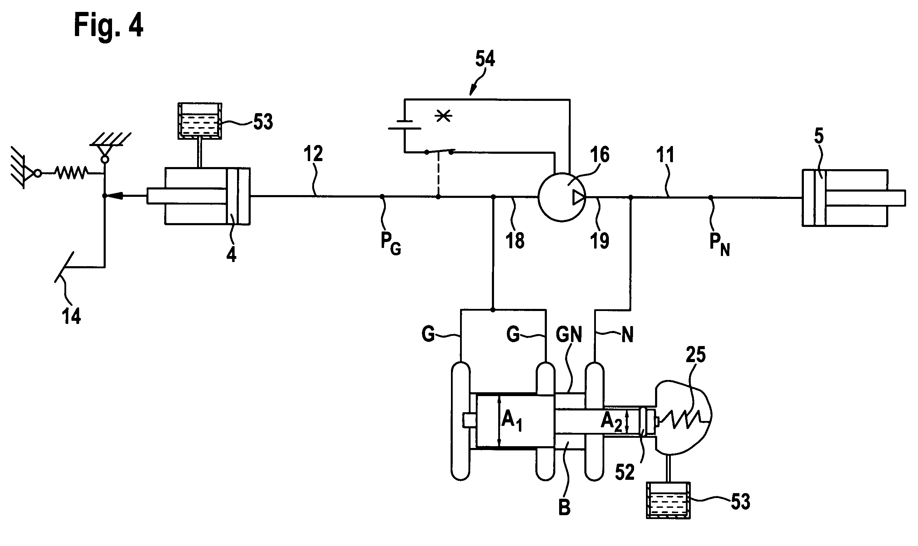

Fig. 3 und 4 verdeutlichen anhand vereinfachter Prinzipskizzen die Wirkungsweise des erfindungsgemäßen hydraulischen Systems mit dem erfindungsgemäßen Ventil. Dargestellt sind jeweils Geberzylinder 4, Nehmerzylinder 5, Kupplungspedal 14, ein Ausgleichsbehälter 53, erster Leitungsstrang 11, zweiter Leitungsstrang 12, Pumpe 16, Feder 25, eine schaltbare Energieversorgung 54 für die Pumpe 16 sowie das Ventil 17. Die Anschlüsse G, N und der Bypass B sowie die Flächen $A_1$ und $A_2$ entsprechen denen des Ausführungsbeispieles der Fig. 2. Das Ventil 17 ist hier der Einfachheit halber auf Seiten der Feder 25 als offenes System dargestellt, dies wird durch eine Dichtung 52 zur Abdichtung des hydraulischen Systems gegenüber der Umgebung angedeutet. Leckendes Hydraulikfluid kann dabei z. B. in den Ausgleichsbehälter 53 gelangen. $P_G$ und $P_N$ bezeichnen auch hier den geber- bzw. nehmerzylinderseitigen Druck.

Fig. 3 zeigt das hydraulische System bei unbetätigter Kupplung. Die Pumpe ist über das Ventil N-G und damit den Bypass B kurzgeschlossen und kann damit auch z. B. mittels einer schaltbaren Energieversorgung 54 abgeschaltet werden oder dauerhaft weiterlaufen. Der Durchfluss des Hydraulikfluids bzw. die Druckübertragung erfolgt an der Pumpe 16 vorbei über den Anschluss G, den Bypass B zum Anschluss N.

Fig. 4 zeigt das hydraulische System bei betätigter Kupplung. Durch den Druckaufbau im System wird der Kolben aus der Ruhelage bewegt und das Ventil GN geschlossen. Dadurch wird der Bypass B verschlossen, das Hydraulikfluid wird nur noch über die Pumpe 16 vom Geberzylinder 4 zum Nehmerzylinder 5 übertragen. In Zwischenstellungen des Kolbens zwischen den Darstellungen der Fig. 3 und der der Fig. 4 wird der Bypass B immer weiter geschlossen, sodass sich die Druckerhöhung durch die Pumpe 16 immer stärker auswirkt.

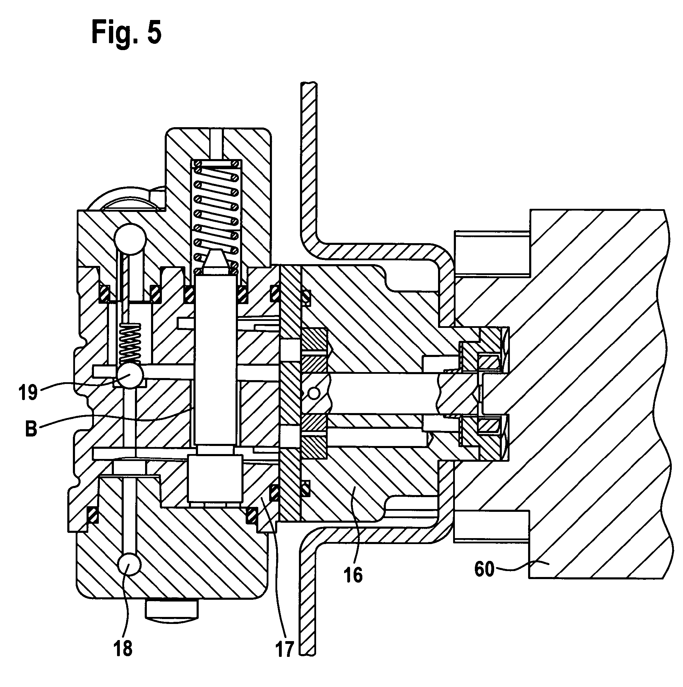

Aus der Figur 5 ist ein Ausführungsbeispiel für eine Pumpe mit Ventilsteuerung ersichtlich. In dieser Figur sind die beiden Prinzipskizzen aus den Figuren 3 und 4 enthalten.

Bei unbetätigter Kupplung erfolgt die Druckübertrag über den Bypass B vom Geberzylinder zum Nehmerzylinder. Bei betätigter Kupplung ist der Bypass B verschlossen und das Hydraulikfluid wird über die Pumpe 16 vom Geberzylinder 4 zum Nehmerzylinder 5 übertragen.

## Bezugszeichenliste

| | |
|---|---|
| 1 | Hydraulisches System |
| 2 | Ventilblock |
| 3 | Kupplungsausrückvorrichtung |
| 4 | Geberzylinder |
| 5 | Nehmerzylinder |
| 6 | Ausrückmechanik |
| 7 | Kupplung |
| 8 | Brennkraftmaschine |
| 9 | Kurbelwelle |
| 10 | Getriebeeingangswelle |
| 11 | erster Leitungsstrang |
| 12 | zweiter Leitungsstrang |
| 13 | mechanische Übertragung |
| 14 | Kupplungspedal |
| 15 | Druckmediumsleitung |
| 16 | Pumpe |
| 17 | Ventil |
| 18 | Eingang |
| 19 | Ausgang |
| 20 | Gehäuse |
| 21 | Bohrung |
| 22 | Kolben |
| 23 | Achse |
| 24 | Deckel |
| 25 | Feder |
| 26 | Stufenbohrung |
| 27 | Zapfen |
| 28 | Erste Zuleitung |
| 29 | Erste Zuleitungsringnut |
| 30 | Zweite Zuleitung |
| 31 | Zweite Zuleitungsringnut |
| 32 | Erste Ableitung |
| 33 | Ableitungsringnut |
| 34 | Dritte Zuleitung |
| 35 | Verbindungsleitung |
| 36 | Dritte Ableitung |
| 37 | Drosselventil |
| 38 | Hydraulikleitung |
| 39 | Erste Kolbenringnut |
| 40 | Zweite Kolbenringnut |
| 41 | Dritte Zuleitung |
| 42 | Ringkolbenraum |
| 43 | Weitere Hydraulikleitung |
| 44 | Anschlag |
| 45 | zapfenabgewandte Nutseite der zweiten Kolbenringnut 40 |
| 46 | zapfenzugewandte Nutseite der zweiten Zuleitungsringnut 31 |
| 47 | zapfenabgewandte Nutseite der ersten Kolbenringnut 39 |
| 48 | zapfenzugewandte Nutseite der Ableitungsringnut 33 |

49 zapfenzugewandte Nutseite der ersten Kolbenringnut 39

50 zapfenabgewandte Nutseite der ersten Zuleitungsringnut 29

51 Stirnfläche

52 Dichtelement

53 Ausgleichsbehälter

54 schaltbare Energieversorgung für Pumpe 16

55 Gehäuse

56 Kolben

57 Druckraum

58 Rückseite

59 Rückseitiger Druckzylinder

60 Motor

GN erste Ventilstellung

GP zweite Ventilstellung

NP dritte Ventilstellung

B Bypass

**Patentansprüche**

1. Hydraulisches System (1), insbesondere für Kraftfahrzeuge, umfassend einen Geberzylinder (4), einen Nehmerzylinder (5) und eine diese verbindende Druckmediumsleitung (11, 12, 15), **dadurch gekennzeichnet, dass** das hydraulische System eine Pumpe (16) mit einem Eingang (18) und einem Ausgang (19) und ein Ventil (17) umfasst, die in der Druckmediumsleitung zwischen Geberzylinder (4) und Nehmerzylinder (5) angeordnet sind, wobei das Ventil (17) eine erste Ventilstellung (GN) hat, in der Geberzylinder (4) und Nehmerzylinder (5) direkt miteinander verbunden sind, sowie eine zweite Ventilstellung (GP), in der der Geberzylinder (4) und der Nehmerzylinder (5) über die Pumpe (16) miteinander verbunden sind.

2. Hydraulisches System nach dem vorhergehenden Anspruch, **dadurch gekennzeichnet, dass** das Ventil eine dritte Ventilstellung (NP) aufweist, in der der Geberzylinder (4) und der Nehmerzylinder (5) über die Pumpe (16) miteinander verbunden sind, wobei der Ausgang (19) und Eingang (18) der Pumpe über einen Bypass (B) miteinander verbunden sind.

3. Hydraulisches System nach einem der vorhergehenden Ansprüche, **dadurch gekennzeichnet, dass** der über den Bypass (B) fließende Volumenstrom durch das Ventil (17) regelbar ist.

4. Hydraulisches System nach einem der vorhergehenden Ansprüche, **dadurch gekennzeichnet, dass** die Ventilstellung des Ventils (17) von dem in dem hydraulischen System herrschenden Druck abhängt.

5. Hydraulisches System nach einem der vorhergehenden Ansprüche, **dadurch gekennzeichnet, dass** das Ventil (17) mindestens einen geberzylinderseitigen Anschluss (G) und einen nehmerzylinderseitigen Anschluss (N) sowie einem Kolben (22), der axial verschieblich in einem Gehäuse (20) angeordnet ist, umfasst, wobei der Kolben eine mit dem geberzylinderseitigen Anschluss (G) hydraulisch in Wirkverbindung stehende Stirnfläche (51) sowie eine der Stirnfläche (51) gegenüberliegende Rückenfläche (58) aufweist, wobei an der Rückenfläche (58) eine Feder (25) angeordnet ist, die auf den Kolben (22) eine Kraft in Richtung der Stirnfläche (51) ausübt und dass sowohl der Kolben (22) als auch das Gehäuse (20) Verbindungskanäle (31, 33, 39) aufweist, die Ventile (GN, NP, GP) bilden, die bei axialer Verschiebung des Kolbens (22) öffnen bzw. schließen.

6. Hydraulisches System nach dem vorhergehenden Anspruch, **dadurch gekennzeichnet, dass** die Verbindungskanäle (31, 33, 39) Ringnuten an der Außenfläche des Kolbens (22) und der Innenfläche des Gehäuses (20) sind.

7. Hydraulisches System nach einem der Ansprüche 5 oder 6, **dadurch gekennzeichnet, dass** das dieses ein erstes Ventil (GN) umfasst, das durch eine (zweite) Zuleitungsringnut (31) des Gehäuses (20) und eine (zweite) Kolbenringnut (40) des Kolbens (22) gebildet wird.

8. Hydraulisches System nach einem der Ansprüche 5 bis 7, **dadurch gekennzeichnet, dass** das dieses ein zweites Ventil (GP) umfasst, das durch eine Ableitungsringnut (31) des Gehäuses (20) und eine (erste) Kolbenringnut (39) des Kolbens (22) gebildet wird.

9. Hydraulisches System nach einem der Ansprüche 5 bis 8, **dadurch gekennzeichnet, dass** das dieses ein drittes Ventil (NP) umfasst, das durch eine (erste) Zuleitungsringnut (29) des Gehäuses (20) und eine (erste) Kolbenringnut (39) des Kolbens (22) gebildet wird.

10. Hydraulisches System nach einem der Ansprüche 5 bis 9, **dadurch gekennzeichnet, dass** das in einer Ausgangslage (X4=0) des Kolbens (22) das erste Ventil (GN) geöffnet, das zweite Ventil (GP) geschlossen und das dritte Ventil (NP) geöffnet ist.

11. Hydraulisches System nach einem der Ansprüche 5 bis 10, **dadurch gekennzeichnet, dass** bei einer axialen Verschiebung (X4) des Kolbens (22), zunächst das erste Ventil (GN) schließt (X4=X1), bei einer weiteren Verschiebung das zweite Ventil (GP) öffnet (X4=X3) und bei einer weiteren Verschiebung (X4=X2) das dritte Ventil (NP) schließt.

12. Hydraulisches System nach einem der Ansprüche 5 bis 11, **dadurch gekennzeichnet, dass** bei einer axialen Verschiebung (X4) des Kolbens (22), bei der das erste Ventil (GN) schließt (X4=X1), das zweite Ventil (GP) öffnet und das dritte Ventil (NP) geöffnet ist.

13. Hydraulisches System nach einem der Ansprüche 5 bis 9, **dadurch gekennzeichnet, dass** das bei einer axialen Verschiebung (X4) des Kolbens (22), bei der das dritte Ventil (NP) schließt, das zweite Ventil (GP) geöffnet und das erste Ventil (NP) geschlossen ist.

14. Hydraulisches System nach einem der Ansprüche 5 bis 13, **dadurch gekennzeichnet, dass** der Kolben (22) an seiner Rückenfläche (58) eine Kolbenfläche ($A_2$) aufweist, die mit einer Stufenbohrung (26) einen Kolben / Zylinderanordnung bildet, die bei Druckbeaufschlagung eine Kraft auf den Kolben (22) in Richtung der Federkraft (25) ausübt.

15. Hydraulisches System nach Anspruch 14, **dadurch gekennzeichnet, dass** die Stufenbohrung (26) hydraulisch mit dem nehmerzylinderseitigen Anschluss (N) verbunden ist.

16. Hydraulisches System nach einem der Ansprüche 5 bis 15, **dadurch gekennzeichnet, dass** vor dem Eingang der Pumpe (16) ein Drosselventil (37) angeordnet ist.

17. Hydraulisches System nach Anspruch 16, **dadurch gekennzeichnet, dass** der Eingang (18) der Pumpe (16) mit einem Ringkolbenraum (41), der durch den Zapfen (27) und den Außenumfang des Kolbens (22) gebildet wird, hydraulisch verbunden ist.

18. Hydraulisches Ventil zur Verwendung in einem hydraulischen System für Kraftfahrzeuge, **gekennzeichnet durch** mindestens ein oder eine Kombination der auf ein hydraulisches Ventil gerichteten Merkmale der vorhergehenden Ansprüche.

**Fig. 1**

EP 1 635 071 A2

Fig. 2

Fig. 3

Fig. 4

# Fig. 5

19

B

18

17

16

60